# EUROPÄISCHE PATENTSCHRIFT

(11) **EP 1 955 931 B1**
(45) Veröffentlichungstag und Bekanntmachung des Hinweises auf die Patenterteilung: **25.05.2011**
(21) Anmeldenummer: 07022722.8
(22) Anmeldetag: 23.11.2007
(51) Int. Cl.: B62D 25/08

(54) **Vordewagenstruktur eines Kraftfahrzeuges**
Front end structure of a motor vehicle
Structure avant d'un véhicule automobile

(30) Priorität: 07.02.2007 DE 102007006031
(43) Veröffentlichungstag der Anmeldung: 13.08.2008
(73) Patentinhaber: Dr. Ing. h.c. F. Porsche AG, 70435 Stuttgart (DE)
(72) Erfinder: Joest, Rainer, 71665 Vaihingen an der Enz (DE); Kappich, Joachim, 75378 Bad Liebenzell (DE); Herntier, Matthias, 75449 Wurmberg (DE)

(56) Entgegenhaltungen:
- EP-A2- 1 400 437
- DE-A1- 1 455 679
- DE-A1- 4 110 553
- DE-A1- 4 129 538
- DE-A1-102004 011 523
- DE-A1-102004 049 034
- DE-A1-102006 008 667
- JP-A- 63 082 880
- US-A- 3 188 132
- US-A- 4 955 662
- US-A- 5 411 311
- US-A1- 2005 067 858

## Beschreibung

Die vorliegende Erfindung betrifft eine Vorderwagenstruktur eines Kraftfahrzeugs mit einem in Fahrzeugquerrichtung verlaufenden Versteifungsteil gemäß dem 0berbegriff des Anspruchs 1. Die Erfindung betrifft außerdem ein mit einer derartigen Vorderwagenstruktur ausgestattetes Kraftfahrzeug.

Eine gattungsgemäße Vorderwagenstruktur ist aus der US 5 411 311 bekannt. Eine weitere Vorderwagenstruktur ist aus der DE 41 10 553 A1 bekannt, bei welcher zur Querversteifung einer Kraftfahrzeugkarosserie ein Bauelement verwendet wird, das aus einem Versteifungsteil besteht, an dessen beiden Enden jeweils einstückig mit ihm verbundene Federbeinaufnahmen vorhanden sind. Dieses Bauelement dient im Bereich seines Versteifungsteils zur Bildung eines Wandbereiches eines quer zur Kraftfahrzeugkarosserie verlaufenden Trägers, dessen weitere Wandbereiche durch einen Boden eines Aggregateraums sowie durch eine Trennwand gebildet werden, welche den Aggregateraum von einem davor liegenden Raum trennen. Das Versteifungsteil ist dabei aus Blech ausgebildet.

Weitere Vorderwagenstrukturen bzw. Versteifungsteile sind beispielsweise aus der EP 1 400 437 A2 und aus der DE 14 55 679 bekannt.

Die vorliegende Erfindung beschäftigt sich mit dem Problem, für eine Vorderwagenstruktur der gattungsgemäßen Art eine verbesserte Ausführungsform anzugeben, welche sich insbesondere durch eine erhöhte Verwindungssteifigkeit auszeichnet.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, ein, in einer Vorderwagenstruktur eines Kraftfahrzeuges in Fahrzeugquerrichtung verlaufendes Versteifungsteil als dreidimensionales und flächiges Teil auszubilden und dieses an zumindest drei seiner Seiten mit dem Kraftfahrzeug fest zu verbinden. Das Versteifungsteil ist dabei als flächiges Gussteil ausgebildet und jeweils längsendseitig fest mit einem Federbeindom des Kraftfahrzeuges und an seiner Längsseite bzw. entlang seiner Längsseite fest mit einem Windlauf verbunden. Darüber hinaus weist das Versteifungsteil Knicke und Abkantungen auf, welche dazu führen, dass schräg zueinander verlaufende Versteifungsflächen geschaffen werden, die dem Versteifungsteil eine hohe Verwindungs- bzw. Biegesteifigkeit verleihen. Die feste Verbindung des Versteifungsteils entlang einer seiner Längsseiten mit einem Windlauf, bzw. einem Windlaufträger des Kraftfahrzeuges sowie die feste Verbindung der Längsenden des Versteifungsteils mit den zugehörigen Federdomen bindet das Versteifungsteil fest an die Karosserie an und steift diese einerseits durch die feste Anbindung und andererseits durch die hohe Eigensteifigkeit des Versteifungsteiles besonders gut aus.

Zweckmäßig ist das Versteifungsteil aus einer Leichtmetalllegierung, insbesondere aus einer Aluminium-Guss-Legierung, ausgebildet. Hierbei werden dem Aluminium beispielsweise durch die Zugabe verschiedener Legierungselemente gezielte und genau vordefinierte Eigenschaften aufgezwungen. Beispiele für derartige Eigenschaften sind beispielsweise Härte, Zähigkeit und eine gute Bearbeitungsfähigkeit. Als Legierungszusätze kommen insbesondere Silizium und Magnesium in Betracht. Ein aus einem Leichtmetall hergestelltes Versteifungsteil bietet dabei neben der hohen erforderlichen Steifigkeit auch ein geringes Gewicht, was insbesondere im Sportwagenbau von großem Vorteil ist.

Erfindungsgemäß ist das Versteifungsteil als Wasserkastenabdeckung ausgebildet. Hierdurch erfüllt das Versteifungsteil eine Zusatzfunktion, nämlich die Abdeckung des Wasserkastens, welcher üblicherweise von einer zusätzlichen Wasserkastenabdeckung aus Kunststoff abgedeckt werden muss. Die bisher übliche Wasserkastenabdeckung kann somit entfallen, wodurch die Teilevielfalt des mit dem erfindungsgemäßen Versteifungsteil ausgestatteten Kraftfahrzeuges reduziert werden kann und dadurch insbesondere Fertigungs- und Logistikkosten reduziert werden können.

Bei einer weiteren vorteilhaften Ausführungsform der erfindungsgemäßen Lösung weist das Versteifungsteil auf seiner im Einbauzustand nach unten weisenden Seite Verstärkungsrippen auf. Diese sind vorzugsweise einteilig mit dem Versteifungsteil hergestellt und während des Herstellungsvorganges des Versteifungsteils an diesem angeformt. Derartige Verstärkungsrippen weisen den großen Vorteil auf, dass sie ein Biegemoment des Versteifungsteiles erheblich erhöhen können ohne dabei gleichzeitig das Gewicht des Versteifungsteils stark zu beeinflussen. Insbesondere lässt sich das dreidimensionale und flächige Versteifungsteil mit den erfindungsgemäßen Verstärkungsrippen im übrigen dünner und dadurch leichter ausbilden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf eine erfindungsgemäße Vorderwagenstruktur eines Kraftfahrzeuges,
- Fig. 2 a,: bverschiedene Ansichten auf ein erfindungsgemäßes Versteifungsteil,
- Fig. 3: eine Schnittdarstellung im Bereich einer Anbindung des Versteifungsteils an einen Federbeindom,
- Fig. 4: eine Schnittdarstellung im Bereich einer Anbindung des Versteifungsteils an einem Windlauf.

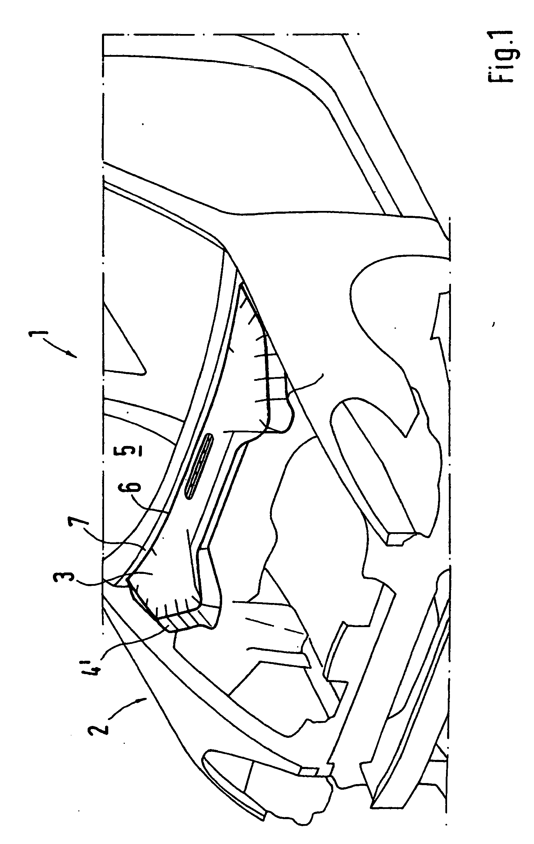

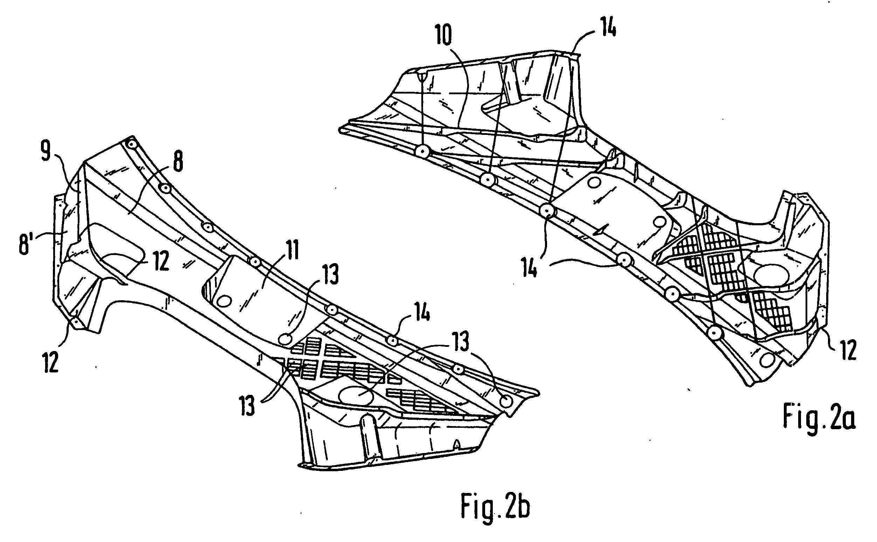

Entsprechend der Fig. 1 weist ein nur teilweise dargestelltes Kraftfahrzeug 1 im Bereich seines Vorderwagens 2 ein in Fahrzeugquerrichtung verlaufendes Versteifungsteil 3 auf. Dieses Versteifungsteil 3 soll den Vorderwagen 2 des Kraftfahrzeuges 1 insbesondere in Querrichtung und gegen eine Verwindung aussteifen. Üblicherweise sind derartige Versteifungsteile als Querträger ausgebildet und beispielsweise längsendseitig mit nicht näher bezeichneten Längsträgern eines Chassis des Kraftfahrzeuges 1 fest verbunden. Im Unterschied dazu ist das erfindungsgemäße Versteifungsteil 3 als flächiges Gussteil ausgebildet (vgl. auch Fig. 2) und jeweils längsendseitig mit einem Federbeindom 4, 4' des Kraftfahrzeugs 1 und an einer, einer Windschutzscheibe 5 zugewandten Längsseite 6 mit einem Windlauf 7 fest verbunden. Die Verbindung zwischen dem Versteifungsteil 3 einerseits und den Federbeindomen 4, 4' des Kraftfahrzeuges 1 und/oder des Windlaufs 7 andererseits kann beispielsweise über Schraubverbindungen erfolgen, welche im Falle einer Reparatur ein leichtes Austauschen des Versteifungsteiles 3 erlauben.

Wie der Fig. 1 weiter zu entnehmen ist, erfüllt das Versteifungsteil 3 neben seiner eigentlichen Aufgabe, nämlich die Vorderwagenstruktur des Kraftfahrzeuges 1 auszusteifen, eine weitere Funktion, nämlich die, einen unter dem Versteifungsteil 3 gelegenen Wasserkasten abzudecken. Diese Abdeckung wurde bisher von einer zusätzlichen, meist aus Kunststoff gefertigten, Wasserkastenabdeckung bewirkt, welche nunmehr entfallen kann. Das erfindungsgemäße Versteifungsteil 3 erfüllt somit zumindest zwei Funktionen.

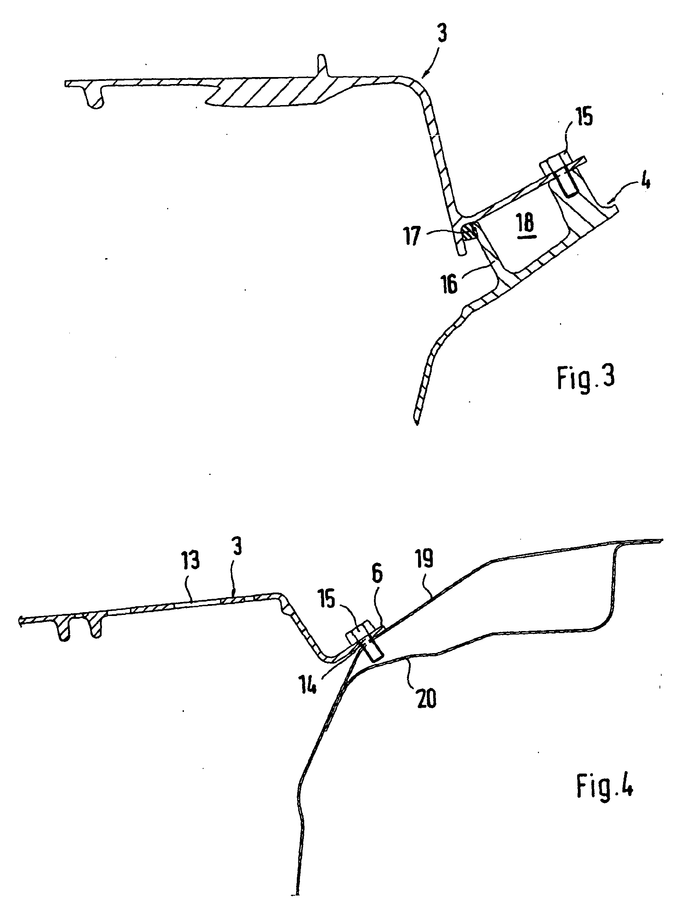

Gemäß der Fig. 2a ist eine in der Einbaulage des Versteifungsteils 3 nach unten weisende Unterseite des Versteifungsteils 3 gezeigt, während demgegenüber in Fig. 2b die in Einbaulage sichtbare Oberseite des Versteifungsteiles 3 dargestellt ist. Es fällt auf, dass das Versteifungsteil 3 als dreidimensionales flächiges Teil ausgebildet ist, welches unterschiedlichste schräg zu einander angeordnete Versteifungsflächen 8, 8' aufweist, welche über eine Abkantung 9 miteinander verbunden sind. Die Versteifungsflächen 8, 8' und die Abkantung 9 sind dabei gemäß den Fig. 2a und b lediglich an einer Stelle rein exemplarisch eingezeichnet und gelten selbstverständlich auch für andere nicht näher bezeichnete Versteifungsflächen des Versteifungsteils 3. An seiner im Einbauzustand nach unten weisenden Seite besitzt das Versteifungsteil 3 Verstärkungsrippen 10, welche gemäß Fig. 2a einander kreuzend angeordnet sind und welche das Biegemoment des Versteifungsteils 3 erhöhende, unterzugartige Stege bilden. Diese Verstärkungsrippen sind vorzugsweise einteilig und zusammen mit dem Versteifungsteil 3 hergestellt bzw. ausgebildet. Die Verstärkungsrippen 10 ermöglichen es darüber hinaus, die Wandstärke des übrigen Versteifungsteils 3 zu reduzieren, ohne dabei Steifigkeitsverluste hinnehmen zu müssen. Dabei fällt gemäß Fig. 2a auf, dass zumindest einige der Verstärkungsrippen 10 jeweils randseitig gelegene Schrauböffnungen 14 miteinander verbinden, und dadurch eine direkte Stegverbindung zwischen einzelnen Schrauböffnungen 14 herstellen. Über diese Schrauböffnungen 14 ist das Versteifungsteil 3 mit entsprechenden Schrauben 15 entweder am Federbeindom 4, 4' oder am Windlauf 7 festgeschraubt (vgl. Fig. 3 und 4). Weitere, die Steifigkeit des Versteifungsteils 3 erhöhende Besonderheiten sind beispielsweise eine Senke 11, sowie Knicke, Falze und Sicken 12.

Gemäß Fig. 2a und b weist das Versteifungsteil 3 mehrere Durchgangsöffnungen 13 auf, welche beispielsweise einen Zugang zu einem Sicherungskasten und/oder einem Bremsflüssigkeitsbehälter und/oder eine Durchführung eines Wischerarms erlauben. Denkbar sind auch Durchgangsöffnungen 13, welche so ausgebildet und zueinander angeordnet sind, dass eine gitterartige Struktur entsteht. Hergestellt werden die Durchgangsöffnungen 13 dabei entweder direkt beim Giessen des als Gussteils ausgebildeten Versteifungsteils 3 oder durch ein nachträgliches Ausstanzen. Wie erwähnt ist das Versteifungsteil 3 als Gussteil, vorzugsweise als Dünnwand-Gussteil ausgebildet, wobei insbesondere eine Leichtmetall-Legierung, beispielsweise eine Aluminium-Guss-Legierung, verwendet wird. Eine derartige Aluminium-Guss-Legierung bietet den großen Vorteil, dass sie einerseits leicht ist, was insbesondere im Sportwagenbau von großem Interesse ist, andererseits jedoch korrosionsbeständig und leicht nachträglich, beispielsweise spanend, zu bearbeiten. Als Aluminium-Guss-Legierung kommt beispielsweise AlSi10Mg in Betracht, wobei eine Wanddicke des dünnwandigen Gussteils ca. 1 bis 3mm, vorzugsweise 2,5 mm beträgt.

Aufgrund seiner Steifigkeit bzw. Festigkeit, kann das Versteifungsteil 3 auch als Träger für eine Fahrzeugkomponente, wie beispielsweise eine Wischeranlage und/oder eine Luftansaugung ausgebildet sein.

In Fig. 3 ist die Anbindung des Versteifungsteils 3 an den Federbeindom 4 gezeigt, wobei die Schnittebene direkt durch die Schraube 15 gelegt ist. Hierbei fällt auf, dass zwischen dem Versteifungsteil 3 und einer Stützrippe 16 des Federbeindoms 4 eine Dichtung 17 angeordnet ist, welche beispielsweise ein Eindringen von Schmutz und/oder Feuchtigkeit in den Hohlraum 18 verhindern soll.

Demgegenüber zeigt Fig. 4 ein Schnittdarstellung im Bereich der Anbindung des Versteifungsteils 3 an seiner Längsseite 6 an eine Stirnwand 19, welche mit einem Windlaufrahmen 20 des Windlaufs 7 verbunden, insbesondere verschweißt ist. Dabei sind an der Längsseite 6 vorzugsweise acht Schrauböffnungen 14 vorgesehen, während an den Längsenden des Versteifungsteiles 3 jeweils drei Schrauböffnungen 14 vorgesehen sind.

Generell gilt für die gemäß den Fig. 1 bis 4 dargestellten Ausführungsformen des Versteifungsteiles 3, dass die Anordnung bzw. Ausbildung von Durchgangsöffnungen 14, Verstärkungsrippen 10, Senken 11, Knicke, Falze, Sicke 12 und/oder Durchgangsöffnungen 13 rein exemplarisch dargestellt ist, so dass auch Versteifungsteile 3 mit die Erfindung nicht verändernden Unterschieden von der Erfindung mit umfasst sein sollen.

## Patentansprüche

1. Vorderwagenstruktur eines Kraftfahrzeugs (1) mit einem in Fahrzeugquerrichtung verlaufenden Versteifungsteil (3), das mit Federbeindomen (4, 4') des Kraftfahrzeugs (1) und mit einem Windlauf (7) verbunden ist, **dadurch gekennzeichnet, dass** das Versteifungsteil (3) als dreidimensionales, flächiges Gussteil ausgebildet ist, das jeweils längsendseitig fest mit einem Federbeindom (4, 4') des Kraftfahrzeuges und an seiner Längsseite bzw. entlang seiner Längsseite fest mit einem Windlauf (7) verbunden ist und dass das flächige Versteifungsteil (3) als Wasserkastenabdeckung ausgebildet ist.

2. Vorderwagenstruktur nach Anspruch 1, **dadurch gekennzeichnet, dass** das Versteifungsteil (3) aus einer Leichtmetalllegierung, insbesondere aus einer Aluminium-Guss-Legierung, ausgebildet ist.

3. Vorderwagenstruktur nach einem der Ansprüche 1 bis 2, **dadurch gekennzeichnet, dass** das Versteifungsteil (3) mit den Federbeindomen (4, 4') des Kraftfahrzeugs (1) und/oder mit dem Windlauf (7) verschraubt ist.

4. Vorderwagenstruktur nach einem der Ansprüche 1 bis 3, **dadurch gekennzeichnet, dass** das Versteifungsteil (3) auf seiner im Einbauzustand nach unten weisenden Seite Verstärkungsrippen (10) aufweist.

5. Vorderwagenstruktur nach einem der Ansprüche 1 bis 4, **dadurch gekennzeichnet, dass** das Versteifungsteil (3) zumindest eine Durchgangsöffnung (13) aufweist, welche beispielsweise einen Zugang zu einem Sicherungskasten und/oder einem Bremsflüssigkeitsbehälter und/oder eine Durchführung eines Wischerarms erlaubt.

6. Vorderwagenstruktur nach Anspruch 5, **dadurch gekennzeichnet, dass** die wenigstens eine Durchgangsöffnung (13, 14) gestanzt ist.

7. Vorderwagenstruktur nach einem der Ansprüche 1 bis 6, **dadurch gekennzeichnet, dass** das Versteifungsteil (3) als Träger für eine Fahrzeugkomponente, wie beispielsweise eine Wischeranlage und/oder eine Luftansaugung ausgebildet ist.

8. Vorderwagenstruktur nach einem der Ansprüche 1 bis 7, **dadurch gekennzeichnet, dass** das Versteifungsteil (3) als Dünnwand-Gussteil ausgebildet ist.

9. Kraftfahrzeug mit einer Vorderwagenstruktur nach einem der Ansprüche 1 bis 7.

## Claims

1. Front-end structure of a motor vehicle (1) having a stiffening part (3) which runs in the transverse direction of the vehicle and is connected to spring strut domes (4, 4') of the motor vehicle (1) and to a cowl (7), **characterized in that** the stiffening part (3) is in the form of a three-dimensional sheet-like cast part which is fixedly connected on each of the longitudinal end sides to a spring strut dome (4, 4') of the motor vehicle and on its longitudinal side or along its longitudinal side to a cowl (7), and **in that** the sheet-like stiffening part (3) is in the form of a water box cover.

2. Front-end structure according to Claim 1, **characterized in that** the stiffening part (3) is formed from a light metal alloy, in particular from a cast aluminum alloy.

3. Front-end structure according to one of Claims 1 to 2, **characterized in that** the stiffening part (3) is screwed to the spring strut domes (4, 4') of the motor vehicle (1) and/or to the cowl (7).

4. Front-end structure according to one of Claims 1 to 3, **characterized in that** the side of the stiffening part (3) which points downward in the installed state has reinforcing ribs (10).

5. Front-end structure according to one of Claims 1 to 4, **characterized in that** the stiffening part (3) has at least one through-opening (13), which permits, for example, access to a fuse box and/or to a brake fluid container and/or a feed-through of a wiper arm.

6. Front-end structure according to Claim 5, **characterized in that** the at least one through-opening (13, 14) is punched.

7. Front-end structure according to one of Claims 1 to 6, **characterized in that** the stiffening part (3) is in the form of a support for a vehicle component such as, for example, a wiper system and/or an air inlet system.

8. Front-end structure according to one of Claims 1 to 7, **characterized in that** the stiffening part (3) is in the form of a thin-walled cast part.

9. Motor vehicle having the front-end structure according to one of Claims 1 to 7.

## Revendications

1. Structure avant d'un véhicule automobile (1) avec une pièce de raidissement (3) s'étendant dans la direction transversale du véhicule et reliée à des dômes de jambe de force (4, 4') du véhicule automobile (1) et avec un tablier (7), **caractérisée en ce que** la pièce de raidissement (3) prend la forme d'une pièce moulée plane à trois dimensions respectivement reliée, du côté d'extrémité longitudinale, fixement à un dôme de jambe de force (4, 4') du véhicule automobile et, au niveau de son côté longitudinal et/ou le long de son côté longitudinal, fixement à un tablier (7) et que la pièce de raidissement (3) plane prend la forme d'un cache de réservoir d'eau.

2. Structure avant selon la revendication 1, **caractérisée en ce que** la pièce de raidissement (3) est fabriquée à partir d'un alliage de métaux légers, notamment d'un alliage de fonte d'aluminium.

3. Structure avant selon l'une quelconque des revendications 1 à 2, **caractérisée en ce que** la pièce de raidissement (3) est visée aux dômes de jambe de force (4, 4') du véhicule automobile (1) et/ou au tablier (7).

4. Structure avant selon l'une quelconque des revendications 1 à 3, **caractérisée en ce que** la pièce de raidissement (3) comporte des nervures de renfort (10) sur son côté orienté vers le bas à l'état monté.

5. Structure avant selon l'une quelconque des revendications 1 à 4, **caractérisée en ce que** la pièce de raidissement (3) comporte au moins une ouverture de passage (13) qui permet par exemple d'accéder au caisson de fusibles et/ou à un réservoir de liquide de frein et/ou d'introduire un bras d'essuie-glace.

6. Structure avant selon la revendication 5, **caractérisée en ce que** l'au moins une ouverture de passage (13, 14) est estampée.

7. Structure avant selon l'une quelconque des revendications 1 à 6, **caractérisée en ce que** la pièce de raidissement (3) prend la forme d'un support d'élément constitutif de véhicule tel que par exemple une unité d'essuie-glace et/ou une aspiration d'air.

8. Structure avant selon l'une quelconque des revendications 1 à 7, **caractérisée en ce que** la pièce de raidissement (3) prend la forme d'une pièce moulée à paroi mince.

9. Véhicule automobile doté d'une structure avant selon l'une quelconque des revendications 1 à 7.
